# NEUE EUROPÄISCHE PATENTSCHRIFT

(11) **EP 0 482 164 B2**
(45) Veröffentlichungstag und Bekanntmachung des Hinweises auf die Entscheidung über den Einspruch: **05.04.2000**
(45) Hinweis auf die Patenterteilung: 05.10.1994
(21) Anmeldenummer: 91909028.2
(22) Anmeldetag: 11.05.1991
(51) Int. Cl.: F02F 11/00, F02B 77/08, G01L 23/22

(54) **ZYLINDERKOPFDICHTUNG**
CYLINDER HEAD GASKET
JOINT DE CULASSE

(30) Priorität: 11.05.1990 DE 4015109
(43) Veröffentlichungstag der Anmeldung: 29.04.1992
(73) Patentinhaber: Elring Klinger GmbH, 72581 Dettingen (DE)
(72) Erfinder: Schäperkötter, Heinrich, Dr.-Ing., W-2057 Wentorf (DE)
(74) Vertreter: Haecker, Walter, Dipl.-Phys.
(86) Internationale Anmeldenummer: EP9100879
(87) Internationale Veröffentlichungsnummer: WO9118198

(56) Entgegenhaltungen:
- WO-A-89/03520
- DE-A- 2 917 406
- DE-A- 2 935 364
- DE-A- 3 001 711
- DE-A- 3 006 603
- DE-A- 3 106 993
- DE-A- 3 143 203
- DE-A- 3 620 733
- SAE Technical Paper Series No. 890272 (1989)
- Stecher, F., "Schwingungen am Dichtspalt von Verbrennungsmotoren", ATZ 70 (1986) 6, S. 209-213
- Lammerink, T.S.J., Fluitman, J.H.J., "Measuring method for optical fibre sensors", in: Journal of Physics, Vol. 17, Nr. 12 (1984), S. 1127-1129
- Lagakos, N., Code, J.H., Bucaro, J.A., "Microbend fibre optic sensor", Technical Digest, EEE Solid-Stak Sensor Conference, Cat. No. 84 CH 2033-9, N.Y., S. 8-9
- Tichy/Gantschi, "Piezoelektrische Messtechnik", Springer Verlag, 1980, S. 2 und 147
- Juckenack, D., "Handbuch der Sensortechnik-Messen mechanischer Grössen" Verlag moderne industrie, 2. Aufl., 1990, S. 311-314

## Beschreibung

Die Erfindung betrifft eine Zylinderkopfdichtung zur Abdichtung des Dichtspalts zwischen Motorblock und Zylinderkopf eines Mehrzylinder-Verbrennungsmotors, welche eine Dichtungsplatte mit mehreren Brennraum-Durchgangsöffnungen, an den letztere umgebenden Rändern der Dichtungsplatte Brennraum-Dichtelemente sowie ein Sensorelement zur Erfassung von Dichtspaltbewegungen aufweist.

Wenn vorstehend und in folgendem von Brennraum-Dichtelementen die Rede ist, so sollen hierunter auch sogenannte Brennraum-Einfassungen verstanden werden, d. h. ringförmige, im Querschnitt L- oder C-förmige Blechelemente, welche die die Brennraum-Durchgangsöffnungen umgebenden Ränder der Dichtungsplatte einfassen.

Für die Steuerung, Regelung und Überwachung von Hubkolben-Verbrennungsmotoren werden zunehmend die Mittel der Elektronik eingesetzt. Durch den Einsatz immer kostengünstiger Mikroprozessoren werden dabei die Gesamtkosten für die Steuerungs- und/oder Regel- und/oder Überwachungsschaltungen wesentlich durch die Kosten der Sensoren bestimmt. Da bei einem Hubkolben-Verbrennungsmotor die Zylinderkopfdichtung direkt dem Einfluß des Verbrennungsvorgangs ausgesetzt ist, stellt sie den idealen Ort für die Anbringung von Sensoren zur Ermittlung der Betriebsparameter des Verbrennungsmotors dar, denn die Verwendung von als separate Baueinheiten ausgebildeten Sensoren scheitert häufig aus Kosten- und Platzgründen, wie z. B. an den beengten Einbaumöglichkeiten bei einem Motor mit 4-Ventil-Technik.

Aus der DE-OS 2 917 406 (Fig. 1 in Verbindung mit den Ansprüchen 1 und 2) ist eine Zylinderkopfdichtung mit in die Dichtungsplatte integriertem Sensor zur Erfassung der bei einer klopfenden Verbrennung auftretenden Schwingungen bekannt geworden, wobei der eigentliche Sensor als aus Kohlepulver bestehende elektrische Widerstandsstrecke ausgebildet und in einem Hohlraum angeordnet ist, der sich im Innern des die Dichtungsplatte im wesentlichen bildenden Weichstoffs in unmittelbarer Nähe einer Zylinderkopfschraube befindet; der Sensor arbeitet also nach dem Prinzip des bekannten Kohlemikrofons und nimmt so den an seinem Ort im Dichtspalt herrschenden, zeitlich veränderlichen Druck auf.

Eine sinnvolle und den heutigen Anforderungen gerecht werdende Motor-Überwachung und/oder -Steuerung und/oder -Regelung sollte jedoch eine zylinderselektive Erfassung der Betriebsparameter ermöglichen, so daß sich z. B. der Verbrennungsablauf für jeden einzelnen Zylinder separat überwachen läßt - es kann ja durchaus vorkommen, daß in einem der Zylinder eine klopfende Verbrennung auftritt, nicht aber in den anderen Zylindern (bedingt z. B. durch die unterschiedlichen Kühlverhältnisse der Zylinder und Ablagerungen in den Brennräumen); gleiches gilt für sogenannte Zündaussetzer, z. B. infolge des Versagens einer Zündkerze, für Glühzündungen, eine verschleppte Verbrennung oder die Änderung des Einspritzverlaufs bei Dieselmotoren. Es hat sich aber gezeigt, daß eine zylinderselektive Erfassung bestimmter Betriebsdaten mit der aus der DE-OS 2 917 406 bekannten Sensoranordnung nicht möglich ist.

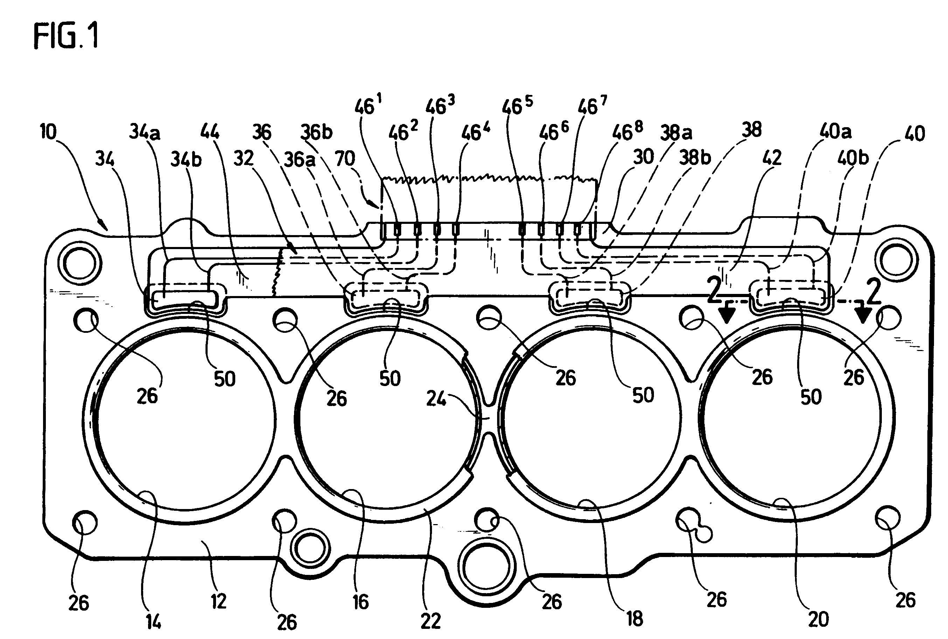

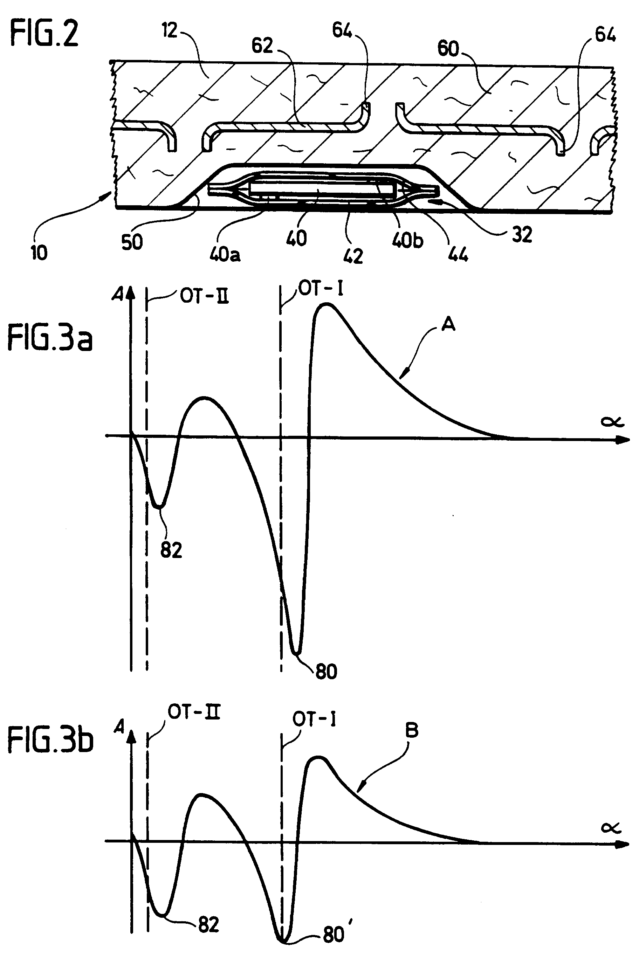

Aus der DE-OS 3 006 603 ist eine Zylinderkopfdichtung mit in deren Dichtungsplatte integrierten Temperatursensoren bekanntgeworden, wobei letztere der Erfassung eines klopfenden Verbrennungsablaufs dienen sollen. Dieser Stand der Technik offenbart zwei grundsätzlich verschiedene Varianten: Bei einer ersten Gruppe von Ausführungsformen der bekannten Zylinderkopfdichtung (siehe Fig. 2, 3, 5 bis 7 und 9) besitzt die Dichtungsplatte für jede Brennraum-Durchgangsöffnung eine Brennraum-Einfassung, und die Temperatursensoren sind innerhalb dieser Brennraum-Einfassungen angeordnet. Würde man wegen des Unvermögens eines Temperatursensors, einen nicht ständig auftretenden klopfenden Verbrennungsablauf zu erfassen, bei dieser bekannten Zylinderkopfdichtung anstelle der Temperatursensoren für die Erfassung von Dichtspaltbewegungen geeignete Sensoren einsetzen, so wären diese infolge ihrer Anordnung innerhalb der Brennraum-Einfassung viel zu hohen Temperaturen ausgesetzt; außerdem würde sich eine solche Lösung aus Platzgründen zumindest beim derzeitigen Stand der Technik nicht realisieren lassen, und schließlich würden die Dichtspaltschwingungen nur durch die Flanschflächen der im Querschnitt ungefähr C-förmigen Brennraum-Einfassungen erfaßt, was zu wenig aussagefähigen Sensorsignalen führen würde. Auch hat jede Integration eines Sensors in eine Brennraum-Einfassung eine Inhomogenität der Brennraum-Einfassung und damit eine örtliche Schwachstelle zur Folge, welche die zuverlässige Brennraum-Abdichtung gefährdet. Bei der in Fig. 1 der DE-OS 3 006 603 gezeigten Variante ist die Dichtungsplatte an den Brennraum-Durchgangsöffnungen weder mit einer Brennraum-Einfassung, noch mit einem Brennraum-Dichtelement versehen. Ein unmittelbar am Rand der betreffenden Brennraum-Durchgangsöffnung angeordneter Temperatursensor würde jedoch innerhalb einer Brennraum-Einfassung liegen, wäre diese Brennraum-Durchgangsöffnung mit einer solchen Brennraum-Einfassung versehen, was die vorstehend geschilderten Konsequenzen hätte.

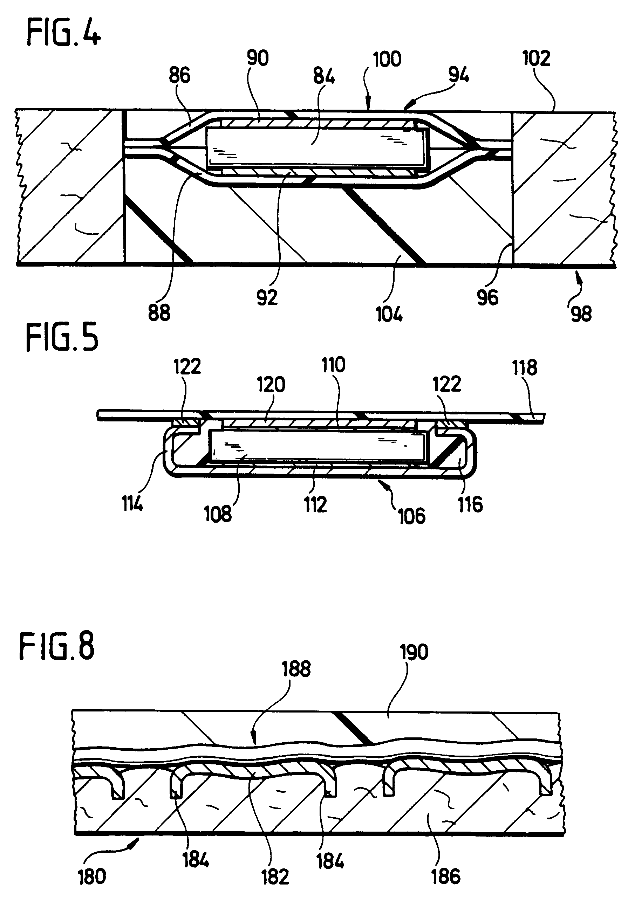

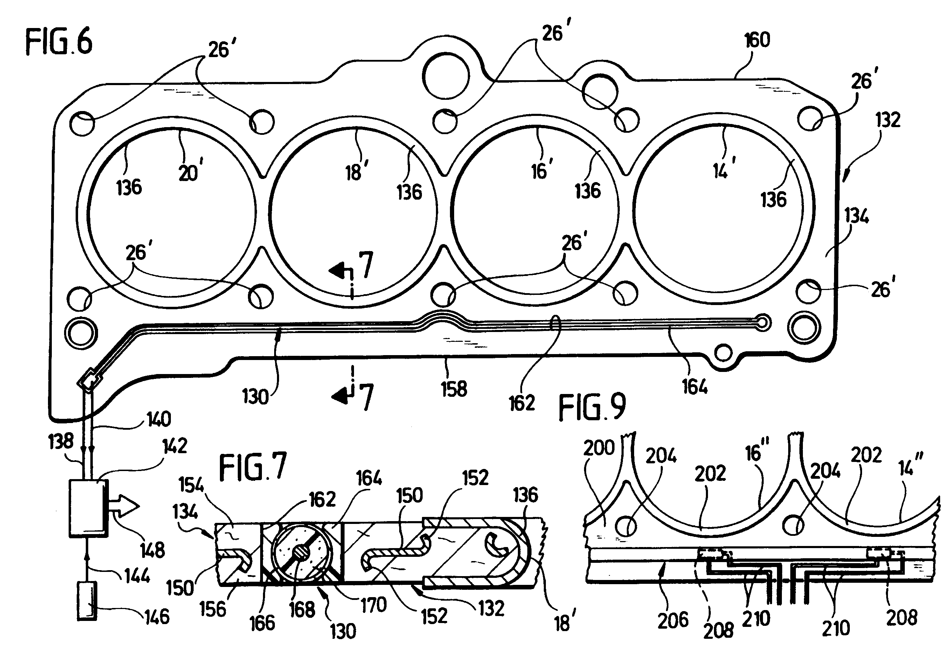

Die DE-OS 3 001 711 offenbart eine Zylinderkopfdichtung, auf deren Dichtungsplatte Lichtleiter angeordnet sind, welche in Öffnungen von Brennraum-Einfassungen und damit an den Brennräumen enden, um mit ihrer Hilfe Helligkeitsschwankungen zu erfassen, welche durch die bei einem klopfenden Verbrennungsablauf auftretenden starken Gasschwingungen hervorgerufen werden (siehe Fig. 5 in Verbindung mit Fig. 4). Bei dieser bekannten Zylinderkopfdichtung stellt ein Lichtleiter also eine reine Optik dar und bildet keinen Sensor, und außerdem besitzt auch diese bekannte Zylinderkopfdichtung den Nachteil unvermeidbarer Schwachstellen in Brennraum-Einfassungen bzw -Dichtelementen, durch die die Lichtleiter hindurchgeführt werden müssen.

Der Erfindung lag nun die Aufgabe zugrunde, bei einem Mehrzylinder-Verbrennungsmotor eine zylinderselektive Erfassung des Verbrennungsablaufs mit geringerem Aufwand als bei bekannten Konstruktionen zu ermöglichen, welche z. B. mit in die Zündkerzen integrierten Sensoren oder mit als separate Bauelemente ausgebildeten und in den Zylinderkopf eingebauten Sensoren arbeiten.

Zur Lösung dieser Aufgabe wird erfindungsgemäß zu einer Zylinderkopfdichtung der eingangs erwähnten Art gegriffen, wie sie beispielsweise aus der DE-OS 2 917 406 bekanntgeworden ist, welche jedoch gemäß der Erfindung so ausgebildet wird, daß ihre Dichtungsplatte mit mehreren, den Brennraum-Durchgangsöffnungen zugeordneten Sensorelementen zur zylinderspezifischen Erfassung der von den Druckänderungen im betreffenden Brennraum verursachten Dichtspaltbewegungen senkrecht zur Ebene der Dichtungsplatte versehen ist, daß ferner die Sensorelemente außerhalb der Brennraum-Dichtelemente angeordnet sind und daß schließlich die Sensorelemente solche der folgenden Gruppe sind: Piezoelektrische, piezoresistive und kapazitive Sensoren sowie Glasfaser-Lichtleiter-Sensoren mit durch Krümmung der Lichtleiterachse veränderlicher Durchgangsdämpfung. Derartige Sensoren zeichnen sich vor allem durch folgende Vorteile aus: Sie sind hinreichend beständig gegen die Temperaturen und Vibrationen, denen sie im Motorbetrieb in einer Zylinderkopfdichtung ausgesetzt sind, sie lassen sich hinreichend klein ausbilden und werden auf dem Markt kostengünstig angeboten, und vor allem die piezoelektrischen und die erwähnten Glasfaser-Lichtleiter-Sensoren gewährleisten einen so hohen Signalpegel, daß elektromagnetische Störeinflüsse nicht ernsthaft ins Gewicht fallen. Durch die Anordnung der Sensorelemente außerhalb der Brennraum-Dichtelemente treten die vorstehend bei der Diskussion bekannter Zylinderkopfdichtungen erwähnten Nachteile nicht auf. Ferner ist das trägheitslose Ansprechen der erfindungsgemäß einzusetzenden Sensorelemente zu betonen ist, ein Vorteil, den die Temperatursensoren der bekannten Zylinderkopfdichtungen nach der vorstehend diskutierten DE-OS 3 006 603 vermissen lassen. Durch die Integration mehrerer Sensorelemente in die Zylinderkopfdichtung, und zwar vorzugsweise an Stellen der Dichtungsplatte, welche den Brennraum-Durchgangsöffnungen unmittelbar benachbart sind, lassen sich die Verbrennungsabläufe in den verschiedenen Zylindern zuverlässig zylinderselektiv erfassen, weil für jeden Zylinder die durch den Verbrennungsdruck verursachten Dichtspaltschwingungen senkrecht zur Ebene der Dichtungsplatte erfaßt werden und sich Signale gewinnen lassen, welche die Überwachung bzw. Steuerung und Regelung des Verbrennungsablaufs ermöglichen. Dabei sind keine aufwendigen baulichen Maßnahmen an den Motorbauteilen (Motorblock und Zylinderkopf) erforderlich, wie dies beim Stand der Technik der Fall ist, wenn der Verbrennungsablauf zylinderselektiv erfaßt wird. Außerdem wird durch die Anordnung der Sensorelemente außerhalb der Brennraum-Dichtelemente eine zuverlässige und stets schwierig zu bewerkstelligende Brennraumabdichtung nicht gefährdet.

Der Einsatz einer erfindungsgemäßen Zylinderkopfdichtung ermöglicht nicht nur die kontinuierliche Überwachung des Motors, sondern insbesondere die Früherkennung von Motorfehlern, wie z. B. Zündaussetzern, über den gesamten Betriebsbereich; Gegenmaßnahmen können also schon vor dem totalen Versagen eines wichtigen Bauteils eingeleitet werden, so daß z. B. die Kraftstoffversorgung eines Zylinders abgeschaltet werden kann, wenn eine Zündkerze mehrfach versagt hat. Gerade die Möglichkeit einer Früherkennung schleichend beginnender Fehler, wie z. B. eine Undichtigkeit des Ansaugsystems oder das Versagen eines Einspritzventils, ist ein besonderer, mit Hilfe einer erfindungsgemäßen Zylinderkopfdichtung erzielbarer Vorteil, da solche Fehler bisher erst bei einem Totalausfall des betreffenden Bauteils ermittelt werden konnte. Dies stellt einen erheblichen Fortschritt dar, da derzeit nur ein Abgastest auf dem Rollenprüfstand eine aussagekräftige Überprüfung eines Fahrzeugmotors gestattet, d. h. der Stand der Technik bietet nur ein indirektes Meßverfahren, aber kein kontinuierlich funktionierendes fahrzeugfestes Meßsystem. Auch liefern die Sensorelemente einer erfindungsgemäßen Zylinderkopfdichtung für jeden Zylinder ein aussagekräftiges Signal bezüglich einer klopfenden Verbrennung, wodurch sich die bisher eingesetzten, separaten Klopfsensoren einsparen lassen - die üblichen Klopfsensoren erfassen die durch die schlagartige Verbrennung des Gemisches verursachten hochfrequenten Schwingungen (ca. 7 kHz) weit entfernt vom Entstehungsort, während bei Verwendung einer erfindungsgemäßen Zylinderkopfdichtung die Schwingungen in unmittelbarer Nähe des Entstehungsortes erfaßt werden, d. h. die Sensorelemente liefern ein für die klopfende Verbrennung spezifisches Signal ohne starke, überlagerte Störungen, z. B. in Form von durch Kolbenkippen oder durch den Ventiltrieb verursachten Schwingungen, Störungen, die beim Stand der Technik stets eine elektronische Aufbereitung des durch den Klopfsensor gelieferten Signals mit Hilfe von Fensterfunktionen und Filtern notwendig machen. Die erfindungsgemäße Zylinderkopfdichtung ermöglicht also eine Vereinfachung der Signalverarbeitung und liefert aussagekräftigere Signale, und gerade im Hinblick auf das Klopfen eines Motors stellt die erfindungsgemäße Zylinderkopfdichtung einen großen Fortschritt dar, und zwar wegen der zylinderspezifischen Signalgewinnung, weil, wie bereits erwähnt, die Klopfempfindlichkeit der verschiedenen Zylinder eines Mehrzylinder-Verbrennungsmotors recht unterschiedlich sein kann.

Ferner lassen sich beim Einsatz einer erfindungsgemäßen Zylinderkopfdichtung Glühzündungen (Entflammung des Gemisches durch örtlich begrenzte, heiße Stellen im Brennraum vor dem gewollten Zündzeitpunkt) sofort erkennen, so daß durch das elektronische Motormanagement sogleich entsprechende Gegenmaßnahmen eingeleitet werden können. Da durch den Verbrennungsablauf Änderungen des Dichtspalts zwischen Motorblock und Zylinderkopf bzw. Änderungen der Dicke der Dichtungsplatte der Zylinderkopfdichtung hervorgerufen werden, ermöglicht es die Erfindung, die Phasenlage, des Verbrennungsablaufs relativ zur Drehwinkelstellung der Kurbelwelle kontinuierlich und zylinderspezifisch direkt zu erfassen, so daß die bekannten Motorsteuersysteme zu einem Regelkreis erweitert werden können. Dadurch läßt sich ein optimaler Zündzeitpunkt bei allen Betriebszuständen, z. B. auch bei instationärem Motorbetrieb, sicherstellen. Des weiteren stellt die Regelung des Verbrennungsablaufs ein Hilfsmittel dar, um den sogenannten Magerbetrieb eines Verbrennungsmotors mit Luftverhältnissen von mehr als 1,6 sicher zu beherrschen. Eine Auswertung der Signale der Sensorelemente einer erfindungsgemäßen Zylinderkopfdichtung hinsichtlich des Druckgradienten (Druckanstieg im Brennraum pro Grad Kurbelwellendrehwinkel) bietet zudem die Möglichkeit, den Verbrennungablauf hinsichtlich geringerer Schallemission zu optimieren. Durch die zunehmende Verkehrsdichte und die heutigen Komfortansprüche gewinnt das Leerlaufverhalten eines Verbrennungsmotors immer mehr an Bedeutung, und zwar hinsichtlich Abgasemision, Kraftstoffverbrauch und Leerlaufqualität (Geräuschentwicklung, störende Zündaussetzer, spürbare Erschütterungen des Fahrzeugs). Bekannte spezielle Regeleinrichtungen zur Steuerung der Leerlaufdrehzahl greifen jedoch erst ein, wenn der Verbrennungsprozeß bereits abgeschlossen ist - hier bietet die Erfindung mit ihrer direkten Überwachung des Verbrennungsablaufs weit bessere Eingriffsmöglichkeiten.

Grundsätzlich können die Sensorelemente einer erfindungsgemäßen Zylinderkopfdichtung ausserhalb der Brennraum-Dichtelemente überall an bzw. in der Dichtungsplatte angeordnet sein, wenn ihre räumlich Beziehung zu den Brennraum-Durchgangsöffnungen so ist, daß sie hinreichend zylinderselektive Signale erzeugen. Es muß auch nicht für jede Brennraum-Durchgangsöffnung ein gesondertes Sensorelement vorgesehen werden; so wäre es z. B. möglich, die Sensorelemente in den Zwickeln der Dichtungsplatte zwischen den Brennraum-Durchgangsöffnungen anzuordnen, so daß jedes Sensorelement von zwei benachbarten Brennraum-Durchgangsöffnungen denselben Abstand aufweist - es ist dann nur erforderlich, die von einem bestimmten Sensorelement erzeugten, für die beiden benachbarten Brennräume spezifischen Signale in einer Auswerteelektronik aufzutrennen und den beiden Brennräumen eindeutig zuzuordnen, was insofern problemlos ist, weil heutzutage ohnehin jeder Motor mit einem mit der Kurbelwelle gekuppelten Drehwinkelgeber ausgestattet ist, so daß sich in der Auswerteelektronik mittels Fensterfunktionen die von diesem Sensorelement erzeugten Signale ohne weiteres spezifisch den beiden benachbarten Brennräumen zuordnen lassen. Bevorzugt werden aber Ausführungsformen der erfindungsgemäßen Zylinderkopfdichtung, bei denen für jede Brennraum-Durchgangsöffnung mindestens ein Sensorelement vorgesehen ist.

Es soll schließlich noch darauf hingewiesen werden, daß durch die Sensoren einer erfindungsgemäßen Zylinderkopfdichtung nicht der Verlauf des Brennraumdrucks als Absolutwert erfaßt werden muß, sondern es ist nur ein Signal zu erzeugen, welches es ermöglicht, diejenige Drehwinkelstellung der Kurbelwelle zu ermitteln, bei der in dem zugeordneten Zylinder der maximale Brennraumdruck auftritt. Es ist daher nur eine relative Messung mit einer nachgeschalteten einfachen Spitzenwerterfassung notwendig. Alterungserscheinungen der Sensorelemente sind also unkritisch.

Bei einer Zylinderkopfdichtung, deren Dichtungsplatte ungefähr rechteckig ist, ungefähr entlang von parallel zu ihren Längsrändern verlaufenden Linien Schraubendurchgangsöffnungen für Zylinderkopfschrauben aufweist und zwischen ihren Brennraum-Durchgangsöffnungen stegartige Bereiche besitzt, wobei die Schraubendurchgangsöffnungen ungefähr in den Verlängerungen dieser stegartigen Bereiche angeordnet sind, empfiehlt es sich, für jede Brennraum-Durchgangsöffnung mindestens ein Sensorelement vorzusehen und die Sensorelemente in den Bereichen zwischen den Schraubendurchgangsöffnungen anzuordnen. Diese bevorzugte Ausführungsform beruht auf folgender Erkenntnis: Da durch den Verbrennungsablauf Dichtspaltänderungen bzw. Änderungen der Dicke der Dichtungsplatte der Zylinderkopfdichtung hervorgerufen werden, und weil diese Änderungen ungefähr in der Mitte zwischen den Zylinderkopfschrauben aufgrund der Motorbauteil-Elastizitäten am größten sind, führt eine solche erfindungsgemäße Zylinderkopfdichtung nicht nur zu zylinderspezifischen Signalen, sondern auch zu Signalen, die wegen des geringen Rauschanteils besonders leicht zu verarbeiten sind; dies gilt insbesondere dann, wenn flächenmäßig kleine Sensorelemente in der Mitte zwischen den Zylinderkopfschrauben angeordnet werden.

Aus ATZ 70, (1968) 6, S. 211, Bild 5, ist es zwar bekannt, die Dichtspaltschwingungen zwischen zwei Zylinderkopfschrauben zu erfassen, jedoch zeigt dieser Stand der Technik eine Konstruktion, die sich mit der erfindungsgemäßen Zylinderkopfdichtung aus den folgenden Gründen überhaupt nicht vergleichen läßt: Bei der bekannten Konstruktion ist das Gehäuse eines induktiven Wegaufnehmers mit der Oberseite einer Zylinderkopf-Unterplatte fest verbunden, und ein stiftförmiger Taster, der den induktiven Wegaufnehmer betätigt, greift durch die Zylinderkopf-Unterplatte sowie die Dichtungsplatte der Zylinderkopfdichtung hindurch und liegt gegen die Oberseite des Motorblocks an. Dabei erstreckt sich der Taster durch ein Loch in der Zylinderkopf-Dichtungsplatte hindurch, welches die Brennraum-Einfassung durchsetzt und diese dadurch schwächt. Außerdem mißt diese bekannte Vorrichtung wegen der Befestigung des Gehäuses des induktiven Wegaufnehmers an der Oberseite der Zylinderkopf-Unterplatte nicht exakt die Bewegungen der Zylinderkopfunterseite gegenüber der Motorblockseite. Schließlich führen die geometrische Größe und die Beschleunigungsempfindlichkeit gegenüber Motorschwingungen zu zusäztlichen Problemen, und es ist eine aufwendige Abdichtung des Taststifts gegen den Kühlwasserraum erforderlich. Würde man die Lehre aus ATZ 70 (1968) 6, S. 211, Bild 5 auf die Zylinderkopfdichtung der DE-OS 2 917 406 übertragen, so müßte man den in die Dichtungsplatte integrierten Sensor zwischen den Flanschen der im Querschnitt C-förmigen Brennraum-Einfassungen anordnen, was die vorstehend bereits erörterten Nachteile mit sich brächte.

Geht man davon aus, daß in einer erfindungsgemäßen Zylinderkopfdichtung Sensorelemente verwendet werden, welche eine konstante Wirkfläche haben, erfassen geeignete und durch den Stand der Technik zur Verfügung gestellte Sensorelemente entweder die Wegänderung der den Dichtspalt begrenzenden Flächen von Motorblock und Zylinderkopf oder die Änderung der auf die Zylinderkopfdichtung einwirkenden Flächenpressung bzw. (bei konstanter Sensorfläche) die Änderung der auf das jeweilige Sensorelement einwirkenden Kraft. Für die erfindungsgemäß in die Zylinderkopfdichtung zu integrierenden Sensorelemente können passive oder, aktive Geber verwendet werden; Beispiele für passive Geber sind piezoresistive Sensorelemente und die erwähnten Glasfaser-Lichtleiter-Sensoren, aber auch kapazitive Sensoren; Beispiele für aktive Geber sind piezoelektrische Sensorelemente, wie piezoelektrische Keramikscheiben oder piezoelektrische Folien.

Die Sensorelemente erfindungsgemäßer Zylinderkopfdichtungen können von diskreten Bauelementen gebildet werden; bevorzugt werden hier piezoelektrische Keramikscheiben. Alternativ können die Sensorelemente aber auch von sensitiven Bereichen eines langgestreckten Sensors gebildet werden, welcher an allen Brennraum-Durchgangsöffnungen vorbeiläuft; eine solche Ausführungsform läßt sich so verwirklichen; dass der langgestreckte Sensor zwischen seinen den verschiedenen Brennraum-Durchgangsöffnungen zugeordneten sensitiven Bereichen inaktive Bereiche besitzt. Eine Unterteilung des langestreckten Sensors in sensitive, den einzelnen Brennraum-Durchgangsöffnungen zugeordnete Bereiche und in inaktive Bereiche läßt sich auf unterschiedliche Weise realisieren: so kann der langestreckte Sensor auf oder in der Dichtungsplatte z. B. so verlegt werden, daß die die sensitiven Bereiche bildenden Sensorabschnitte nahe den Brennraum-Durchgangsöffnungen liegen und die übrigen Sensorabschnitte in Bereichen der Zylinderkopfdichtung liegen, die im eingebauten Zustand der Zylinderkopfdichtung nicht gepreßt werden. Es wäre aber auch möglich, die die inaktiven Bereiche bildenden Sensorabschnitte z. B. in steifen Röhrchen oder dergleichen zu verlegen, so daß sie nicht gepreßt oder keinen wechselnden Drücken oder Verformungen ausgesetzt werden.

Optimale Signale erhält man, wenn bei einer enfindungsgemäßen Zylinderkopfdichtung die Sensorelemente möglichst nahe (auch wenn ggf. z.B. Kühlwasserdurchgangsöffnungen zwischen den Sensorelementen und den Brennraum-Durchgangsöffnungen liegen)den benachbarten Brennraum-Dichtelementen, jedoch nicht im Bereich der eigentlichen Brennraum-Dichtelemente, anordnet - dort können noch für die Sensorelemente unzuträglich hohe Temperaturen herrschen, und die geometrischen Verhältnisse würden die Gestaltung und Anordnung der Sensorelemente erheblich erschweren.

Handelt es sich bei den Sensorelementen bzw. Sensoren erfindungsgemäßer Zylinderkopfdichtungen um Glasfaser-Lichtleiter-Sensoren mit durch Krümmung der Lichtleiterachse veränderlicher Durchgangsdämpfung, so müssen die Enden eines solchen Lichtleiters natürlich mit einem Lichtsender und einem Lichtempfänger versehen bzw. gekoppelt werden; diese Elemente lassen sich aber ohne weiteres außerhalb der hohen Temperaturen und starken Vibrationen ausgesetzten Bereiche anordnen.

Gegenstand der Erfindung ist des weiteren die Verwendung einer erfindungsgemäßen Zylinderkopfdichtung in einem eine Steuer- und/oder Regel- und/oder Überwachungsschaltung aufweisenden Hubkolben-Verbrennungsmotor, wobei erfindungsgemäß die Sensorelemente der Zylinderkopfdichtung Bestandteile dieser Schaltung sind. Insbesondere werden dabei die Sensorelemente zur Erkennung von Zündaussetzern und gegebenenfalls zur Abschaltung der Kraftstoffzufuhr zu dem entsprechenden Zylinder und/oder als Klopfsensoren und gegebenenfalls zur Veränderung des Zündzeitpunkts des jeweils zugeordneten Zylinders verwendet. Es kann außerdem zweckmäßig sein, außer den Sensorelementen einen weiteren Teil der Schaltung an der Dichtungsplatte anzuordnen, und zwar auf einem bei eingebauter Zylinderkopfdichtung freiliegenden Randbereich der Dichtungsplatte; bei diesem Schaltungsteil handelt es sich insbesondere um einen Vorverstärker zur Verbesserung der Qualität der von den Sensorelementen erzeugten Signale.

Weitere, vorteilhafte Ausführungsformen und Merkmale der erfindungsgemäßen Zylinderkopfdichtung ergeben sich aus den beigefügten Ansprüchen sowie aus den Unterlagen der deutschen Patentanmeldung P 40 15 109.3 vom 11. Mai 1990, deren Offenbarung in vollem Umfang Bestandteil dieser Anmeldung sein soll.

Weitere Merkmale, Vorteile und Einzelheiten der Erfindung ergeben sich ferner aus der nachfolgenden Beschreibung sowie der beigefügten zeichnerischen Darstellung einiger bevorzugter Ausführungsformen der erfindungsgemäßen Zylinderkopfdichtung; in der Zeichnung zeigen:
- Fig. 1:: Eine Draufsicht auf eine erste Ausführungsform der erfindungsgemäßen Zylinderkopfdichtung für einen Vierzylinder-Motor, wobei allerdings darauf hingewiesen werden soll, daß die Zylinderzahl eine andere sein könnte;
- Fig. 2:: einen Schnitt durch diese Zylinderkopfdichtung nach der Linie 2-2 in Fig. 1;
- Fig. 3:: zwei Diagramme, in denen die von einem piezoelektrischen Sensorelement einer erfindungsgemäßen Zylinderkopfdichtung erzeugten Signale über der Kurbelwellen-Drehwinkelstellung aufgetragen sind, wobei Fig. 3a den Signalverlauf bei einer Zündung in dem dem Sensorelement zugeordneten Zylinder und Fig. 3b den Signalverlauf ohne Zündung in diesem Zylinder zeigt;
- Fig. 4:: einen der Fig. 2 entsprechenden Schnitt durch eine zweite Ausführungsform der erfindinngsgemäßen Zylinderkopfdichtung;
- Fig. 5:: einen Schnitt durch eine weitere Ausführungsform eines Sensorelements für eine erfindungsgemäße Zylinderkopfdichtung, wobei der Schnitt den Schnittdarstellungen in den Fig. 2 und 4 entspricht;
- Fig. 6:: eine stark vereinfachte Draufsicht auf eine weitere Ausführungsform der erfindinngsgemäßen Zylinderkopfdichtung, welche im Gegensatz zu der in Fig. 1 gezeigten Ausführungsform nicht mehrere diskrete Sensorelemente, sondern einen allen Brennraum-Durchgangsöffnungen gemeinsamen, langgestreckten Sensor aufweist, der an eine schematisch dargestellte Auswerteelektronik angeschlossen ist;
- Fig. 7:: einen Schnitt durch diese Zylinderkopfdichtung nach der Linie 7-7 in Fig. 6;
- Fig. 8:: einen Schnitt durch einen Teil einer weiteren Ausführungsform der erfindungsgemäßen Zylinderkopfdichtung, wobei der Schnitt entsprechend der Linie 8-8 in Fig. 6 gelegt wurde, und
- Fig. 9:: eine schematische Draufsicht auf einen Teilbereich einer weiteren Ausführungsform der erfindungsgemäßen Zylinderkopfdichtung.

Die Fig. 1 zeigt eine Zylinderkopfdichtinng 10 mit einer Dichtungsplatte 12, welche vier Brennraum-Durchgangsöffnungen 14, 16, 18 und 20 besitzt, wobei die die Brennraum-Durchgangsöffnungen umfassenden Randbereiche der Dichtungsplatte 12 mit sogenannten Brennraum-Einfassungen 22 eingefaßt sind. Diese Brennraum-Einfassungen sind ring- und im Querschnitt C-förmige Blechelemente, welche die Ränder der Dichtungsplatte 12 übergreifen. Natürlich können anstelle solcher Brennraum-Einfassungen auch beliebige andere Brennraum-Dichtelemente bekannter Art eingesetzt werden. Zwischen den Brennraum-Durchgangsöffnungen 16 und 18 wurden die Brennraum-Einfassungen 22 teilweise weggebrochen, um darzustellen, daß die Dichtungsplatte 12 zwischen den Brennraum-Durchgangsöffnungen Stege 24 bildet, in deren Verlängerung die Dichtungsplatte 12 mit Schraubendurchgangsöffnungen 26 für Zylinderkopfschrauben versehen ist. Jeweils zwei weitere Schraubendurchgangsöffnungen 26 befinden sich neben den endständigen Brennraum-Durchgangsöffnungen bzw. den Schmalseiten der Dichtungsplatte.

Im Bereich ihrer einen Längsseite ist die Dichtungsplatte 12 erfindungsgemäß mit einem stegartigen Vorsprung 30 versehen; bei in den Motor eingebauter Zylinderkopfdichtinng werden alle Bereiche der Dichtungsplatte 12 vom Zylinderkopf und vom Motorblock vollflächig abgedeckt mit Ausnahme dieses Vorsprungs 30, welcher seitlich über den Motorblock und den Zylinderkopf übersteht.

Die Fig. 1 zeigt nun eine Draufsicht auf die Zylinderkopfdichtung, und zwar von der Seite des Motorblocks aus gesehen. Wegen der geringeren Bauteiltemperatur ist vorzugsweise auf diese Seite der Dichtungsplatte eine Sensoreinheit 32 aufgebracht, insbesondere aufgeklebt, welche, wie anhand der Fig. 2 noch erläutert werden wird, aus zwei Folien, zwischen diesen angeordneten Sensorelementen, elektrischen Anschlußleitungen und Kontaktelementen besteht. Wie die Fig. 1 zeigt, befindet sich zwischen zwei Schraubendurchgangsöffnungen 26 sowie zwischen der zugeordneten Brennraum-Durchgangsöffnung einerseits und dem gemäß Fig. 1 oberen Längsrand der Dichtungsplatte 12 andererseits jeweils ein Sensorelement 34 bzw. 36 bzw. 38 bzw. 40, das ausweislich der Fig. 2 die Gestalt eines flachen Plättchens hat und an das jeweils zwei Anschlußleitungen 34a, 34b bzw. 36a, 36b etc. angeschlossen sind. Die Sensorelemente sowie die Anschlußleitungen liegen zwischen zwei Folien 42 und 44, deren Gestalt in der Draufsicht derjenigen der gesamten Sensoreinheit 32 entspricht und deren Ränder dicht miteinander verbunden, insbesondere verschweißt oder verklebt, sind, so wie dies die Fig. 2 erkennen läßt. Auf der nach außen gewandten Seite der Folie 42 befinden sich acht plättchenförmige metallische Kontaktelemente 46¹ bis 46⁸, die, eine Reihe bildend, nebeneinander auf dem Vorsprung 30 angeordnet sind, wobei die Anschlußleitung 34a zum Kontaktelement 46¹, die Anschlußleitung 34b zum Kontaktelement 46², die Anschlußleitung 36a zum Kontaktelement 46³, die Anschlußleitung 36b zum Kontaktelement 46⁴, die Anschlußleitung 38a zum Kontaktelement 46⁵, die Anschlußleitung 38b zum Kontaktelement 46⁶, die Anschlußleitung 40a zum Kontaktelement 46⁷ und die Anschlußleitung 40b zum Kontaktelement 46⁸ führt. Wenn die erfindungsgemäße Zylinderkopfdichtinng an eine Steuer und/oder Regel- und/oder Überwachungsschaltung angeschlossen ist, sind die Kontaktelemente 46², 46⁴, 46⁶ und 46⁸ miteinander verbunden und an Masse angeschlossen, während an den Kontaktelementen 46¹, 46³, 46⁵ und 46⁷ Signale abgegriffen werden können, die spezifisch für den Zylinder I bzw. Zylinder II bzw. Zylinder III bzw. Zylinder IV sind, welche den Brennraum-Durchgangsöffnungen 14, 16, 18 und 20 entsprechen. Wegen des Vorsprungs 30 der erfindinngsgemäßen Zylinderkopfdichtung und der hierauf angeordneten Kontaktelemente 46¹ bis 46⁸ lassen sich diese Signale einfach mit Hilfe eines mehrpoligen Steckers 70 abgreifen, der am Vorsprung 30 der Zylinderkopfdichtung angebracht werden kann. Die elektrische Verschaltung kann auch im Stecker erfolgen. Ferner ist es möglich, die Anschlußleitungen direkt mit einem elektronischen Verstärker (z. B. Dickfilmschaltkreis) zu verbinden, der zwischen den Folien 42 und 44 oder auf der Oberseite der Folie 42 im Bereich des Vorsprungs 30 angeordnet ist.

Da vorteilhafterweise die Sensorelemente auf der dem Motorblock zugewandten Seite der Zylinderkopfdichtung angebracht werden, weist die Dichtungsplatte 12 auf dieser Seite Einprägungen 50 auf (siehe Fig. 2), und zwar entweder eine in der Tiefe abgestufte einzige Einprägung für die gesamte Sensoreinheit 32 oder - wegen der geringen Dicke der Folien 42 und 44 sowie der Anschlußleitungen - für jedes der Sensorelemente eine gesonderte Einprägung.

Bei der in der beigefügten Zeichnung dargestellten Zylinderkopfdichtung soll es sich um eine solche handeln, deren Dichtungsplatte aus einem beidseitig mit sogenanntem Weichstoff 60 beschichteten Trägerblech 62 besteht, aus dem nach beiden Seiten Verankerungszacken 64 herausgebogen sind, die der Verankerung der Weichstoffschichten am Trägerblech dienen. Natürlich müssen diese Verankerungszacken so dimensioniert oder durch Prägen so verformt worden sein, daß nicht die Gefahr besteht, daß beim Anziehen des Zylinderkopfs die Sensoreinheit 32 durch die Verankerungszacken beschädigt wird. Die Sensoreinheit kann aber auch in Verbindung mit Zylinderkopfdichtungen anderer Bauart, z. B. mit einer Dichtungsplatte aus ein- oder mehrlagigem Blech, verwendet werden.

In der Zeichnung sind die Anschlußleitungen als im wesentlichen geradlinig verlaufend gezeichnet worden. Dies erfolgte jedoch nur aus Gründen der einfacheren Darstellung, denn bei der bevorzugten Ausführungsform der erfindungsgemäßen Zylinderkopfdichtung sollen die Anschlußleitungen einen mäanderförmigen Verlauf haben und insbesondere als auf die Folien aufgedruckte Leiterbahnen ausgebildet sein, welche dann durch die Folien hindurch mit den Kontaktelementen 46¹ bis 46⁸ leitend verbunden sind.

Die übrigen; aus Fig. 1 ersichtlichen Bestandteile der Zylinderkopfdichtung wurden nicht beschrieben, da diese nicht im Zusammenhang mit der vorliegenden Erfindung stehen. Ebensowenig wurde die Steuer- und/oder Regel- und/oder Überwachungsschaltung dargestellt, an die die Sensoreinheit 32 angeschlossen wird. Angedeutet wurde in Fig. 1 lediglich ein Teil eines Steckers 70, der auf den Vorsprung 30 aufgeschoben werden kann und die Kontaktelemente mit der erwähnten Schaltung elektrisch leitend verbinden soll.

Erfindungsgemäß könnten die Sensorelemente 34 und 40 auch zwischen den endständigen Schraubendurchgangsöffnungen 26 angeordnet sein; es wäre aber auch denkbar, zwei zusätzliche Sensorelemente zwischen diesen endständigen Schraubendurchgangsöffnungen 26 anzuordnen.

Nach einem weiteren Merkmal der Erfindung werden die Sensorelemente vorteilhafterweise auf derjenigen Längsseite der Dichtungsplatte angeordnet, welche der Abgaskrümmerseite des Motors gegenüberliegt, um so die Temperaturbelastung der Sensorelemente möglichst klein zu halten.

Für die Erläuterung der Fig. 3 (Fig. 3a und 3b) sei angenommen, daß die beiden Diagramme das gegebenenfalls verstärkte Ausgangssignal des Sensorelements 34 zeigen, welches der Brennraum-Durchgangsöffnung 14 für den ersten Zylinder (Zylinder I) zugeordnet ist. Aufgenommen wurde das Ausgangssignal eines piezoelektrischen Sensorelements, und zwar wurde die Signalamplitude A als Ordinate über dem Drehwinkel α - (Abszisse) der Kubelwelle aufgetragen. Diejenigen Kurbelwellenstellungen, in denen sich der Kolben des Zylinders I und der Kolben des zur Brennraum-Durchgangsöffnung 16 gehörenden Zylinders II jeweils im oberen Totpunkt befinden, wurden mit OT-I bzw. OT-II gekennzeichnet. Wie bereits erwähnt zeigt die Fig. 3a das Ausgangssignal des dem Zylinder I zugeordneten Sensorelements 34 bei normaler Motorfunktion, d.h. bei Zündung des Gemischs in den Zylindern I und II, während die Fig. 3b das Ausgangssignal des dem Zylinder I zugeordneten Sensorelements 34 zeigt, nachdem der Zündkerzenstecker für den Zylinder I abgezogen wurde - das Gemisch im Zylinder II wurde also normal gezündet. Entsprechend dem Verbrennungsablauf weist das in Fig. 3a dargestellte Ausgangssignal A einen Extremwert 80 nach dem oberen Totpunkt OT-I des Kolbens des Zylinders I auf, während ein nachfolgender, wesentlich geringerer Extremwert 82 des Ausgangssignals A auf die Dichtspaltänderung am Ort des dem Zylinder I zugeordneten Sensorelements 34 zurückzuführen ist, die durch den Verbrennungsablauf im benachbarten Zylinder II hervorgerufen wurde.

Das in Fig. 3b dargestellte Ausgangssignal B des Sensorelements 34 zeigt einen ersten Extremwert 80', welcher nicht nur wesentlich kleiner ist als der erste Extremwert 80 des Ausgangssignals A, sondern auch genau im oberem Totpunkt OT-I des Kolbens des Zylinders I liegt. Die Verkleinerung und Verschiebung des ersten Extremwerts 80' des Ausgangssignals B im Vergleich zum ersten Extremwert 80 des Ausgangssignals A sind auf den flacheren Druckverlauf ohne Zündvorgang (polytrope Kompression) im Zylinder I zurückzuführen, während der zweite Extremwert 82 des Ausgangssignals B nach Größe und Phasenlage erwartungsgemäß mit dem zweiten Extremwert 82 des Ausgangssignals A übereinstimmt, weil auch bei der Aufzeichnung des Ausgangssignals B im Zylinder II ein Zündvorgang erfolgte.

Ein Vergleich der Fig. 3a und 3b läßt also erkennen, daß das Sensorelement 34 einen Zünd- bzw. Verbrennungsaussetzer im Zylinder I eindeutig anzeigt, und zwar sowohl durch eine Verschiebung des Signalmaximums bzw. Extremwerts 80' in den oberen Totpunkt OT-I des Zylinders I, als auch durch eine sehr deutliche Verkleinerung des Signalmaximums bzw. Signalextremwerts, verglichen mit dem sich bei erfolgter Zündung ergebenden Signalmaximum bzw. Signalextremwert.

Nur der Vollständigkeit halber sei erwähnt, daß die Fig. 3a und 3b die Ausgangssignale A und B in geglätteter Form wiedergeben, da in Wirklichkeit den dargestellten Nutzsignalen hochfrequente Störsignale überlagert sind, deren Amplituden jedoch nur einen Bruchteil der Amplituden der Nutzsignale betragen.

Die Fig. 4 zeigt eine besonders bevorzugte Ausführungsform eines in eine Zylinderkopfdichtung integrierten Sensorelements. Dieses besteht aus einer kleinen piezoelektrischen Keramikscheibe 84, welche zwischen Kunststoffolien 86 und 88 eingeschweißt ist. Bei den Kunststoffolien 86, 88 handelt es sich vorzugsweise - wie bei der Ausführungsform nach den Fig. 1 und 2 - um Folienstreifen, zwischen denen die Keramikscheiben 84 für alle Brennraum-Durchgangsöffnungen der Zylinderkopfdichtung angeordnet sind. Bevorzugt wird eine Polyimidfolie verwendet, da diese bis ca. 400°C temperaturbeständig ist und sich kaschieren, metallisieren, stanzen, schneiden und mit Klebstoff beschichten läßt. Zwischen den Kunststoffolien 86 und 88 und der Keramikscheibe 84 verlaufen metallische Leiterbahnen 90 und 92, bei denen es sich vorzugsweise um auf die Kunststoffolien aufgedruckte oder in anderer Weise aufgebrachte Leiterbahnen handelt und durch die die Keramikscheibe 84 auf ihren beiden einander gegenüberliegenden Hauptoberflächen kontaktiert wird, um das durch die piezoelektrische Keramikscheibe bei Druckeinwirkung erzeugte elektrische Signal abgreifen zu können. Das als Ganzes mit 94 bezeichnete Sensorelement ist in einer insbesondere ausgestanzten Öffnung 96 einer Dichtungsplatte 98 der Zylinderkopfdichtung angeordnet, und zwar so, daß die obere Hauptoberfläche 100 des Sensorelements 94 mit der oberen Hauptoberfläche 102 der Dichtungsplatte 98 bündig ist. Der unter dem Sensorelement 94 liegende Bereich der Öffnung 96 ist mit einem relativ harten elastomeren Material 104 ausgegossen, so daß das Sensorelement 94 bei zwischen Zylinderkopf und Motorblock eingebauter Zylinderkopfdichtinng mit sich entsprechend dem Verbrennungsablauf ändernden Drücken beaufschlagt wird.

Die Leiterbahnen 90, 92 oder andere, die Keramikscheibe 84 kontaktierende Leiterelemente bestehen vorzugsweise aus Silber. In Abänderung der in Fig. 4 gezeigten Ausführungsform könnte das Sensorelement 94 auch mehr im Inneren der Öffnung 96 angeordnet werden, worauf dann diese Öffnung von beiden Seiten her mit einem geeigneten elastomeren Material ausgefüllt wird, um so die Kraftübertragung und Anpassung an die Motorbauteiloberflächen zu bewerkstelligen; in diesem Fall könnten die beiden Kunststoffolien 86 und 88 auch weggelassen werden, da mit den beidseits der Keramikscheibe 84 angeordneten Elastomerschichten die Keramikscheibe samt Kontaktelementen gegen alle Medien abgedichtet werden kann, mit denen die Zylinderkopfdichtung in Berührung kommt (vor allem Kühlwasser und Motoröl). In jedem Fall verhindern die Kunststoffolien und/oder die elastomeren Schichten die Gefahr eines elektrischen Kurzschlusses. Die metallischen Kontaktelemente können mit der Keramikscheibe 84 zusätzlich verlötet oder mit einem elektrisch leitfähigen Kleber verklebt sein.

Bei der in Fig. 4 dargestellten Ausführungsform könnte der Motorblock oder der Zylinderkopf einen gemeinsamen Massekontakt für die Keramikscheiben aller Sensorelemente bilden, wenn die obere Kunststoffolie 86 weggelassen wird und die obere Leiterbahn 90 oder ein metallisierter Bereich der Oberseite der Keramikscheibe 84 mit der oberen Hauptoberfläche 102 der Dichtungsplatte 98 bündig ist. Vor allem in diesem Fall könnte das Sensorelement gegen Wasser und Öl dadurch abgedichtet werden, daß die Dichtungsplatte 98 auf ihrer oberen Hauptoberfläche 102, z.B. im Siebdruckverfahren, mit einer elastomeren Dichtwulst versehen wird, welche die Öffnung 96 vollständig umschließt.

Bei einer bevorzugten Ausführungsform hat die Keramikscheibe 84 eine runde Form mit einem Durchmesser von ca. 5 mm. Derartige piezoelektrische Keramikscheiben sind im Handel mit einer Dicke ab ca. 0,2 mm erhältlich. Der Durchmesser der Keramikscheibe sollte möglichst klein sein, damit auch die Biegebeanspruchung der Keramikscheibe klein ist, weil sonst wegen der Sprödigkeit keramischen Materials ein Bruchrisiko besteht. Außerdem lassen sich derartige kleine Sensorelemente bei jeder geometrischen Gestaltung der Zylinderkopfdichtung hinreichend nahe an den Brennraum-Durchgangsöffnungen anordnen. Die zum Einbetten oder einseitigen Abstützen der Sensorelemente verwendeten elastomeren Materialien sollen relativ hart sein, damit hochfrequente Schwingungen (ca. 7 kHz bei klopfender Verbrennung) erfaßt werden und damit ein hoher Meßeffekt erzielt wird. Andererseits sollte das elastomere Material aber genügend weich sein, damit eine Anpassung an die Motorbauteile (Motorblock und Zylinderkopf) erfolgen kann. Außerdem muß das elastomere Material kriechfest sein. Zweckmäßigerweise werden die Keramikscheiben vor der Montage in der Dichtungsplatte der Zylinderkopfdichtung auf eine mit den Leiterbahnen versehene Kunststoffolie aufgeklebt oder aufgelötet, worauf die Folie so auf die Dichtungsplatte aufgelegt wird, daß die Keramikscheiben in die Öffnungen der Dichtungsplatte eingreifen, worauf diese Öffnungen von der Rückseite her mit dem elastomeren Material ausgefüllt werden.

Für diese Einbauvariante eignet sich besonders gut die in Fig. 5 dargestellte Ausführungsform eines Sensorelements 106, welches als wesentliches Bauteil wieder eine piezoelektrische Keramikscheibe 108 enthält. Die beiden einander gegenüberliegenden Hauptoberflächen der Keramikscheibe 108 sind mit metallischen Kontaktschichten 110 und 112 versehen, die Keramikscheibe wird von einer oben offenen metallischen Kapsel 114 aufgenommen, welche gleichzeitig als Gehäuse und als eine der beiden Elektroden dient, und der von der Keramikscheibe 108 nicht ausgefüllte Innenraum der Kapsel 114 ist mit einem geeigneten Isoliermaterial 116 ausgefüllt. Befestigt ist das Sensorelement 106 an einer Kunststoffolie 118, die mit aufgedruckten metallischen Leiterbahnen 120 und 122 versehen ist, wobei die Leiterbahn 120 die Kontaktschicht 110 und die Leiterbahnen 122 die metallische Kapsel 114 kontaktieren. An die Stelle der Leiterbahnen 120 und 122 können natürlich auch andere Kontaktelemente treten.

Anstelle der vorstehend erwähnten Polyimidfolien können auch temperaturbeständige Polyesterfolien Verwendung finden.

Die in den Fig. 6 und 7 dargestellte Ausführungsform einer erfindinngsgemäßen Zylinderkopfdichtung besitzt einen langgestrecken Sensor 130, welcher an allen Brennraum-Durchgangsöffnungen der Zylinderkopfdichtung vorbeiläuft. Bei dem Sensor 130 soll es sich um ein bekanntes piezoelektrisches Elastomerkabel handeln, in gleicher Weise könnte der Sensor aber auch als Glasfaser-Lichtleiter-Sensor ausgebildet sein, worauf später noch näher eingegangen werden wird.

Die in Fig. 6 gezeigte Zylinderkopfdichtinng 132 besitzt eine Dichtungsplatte 134, mit mit Brennraum-Einfassungen 136 versehenen Brennraum-Durchgangsöffnungen 14', 16', 18' und 20' sowie Schrauben-Durchgangsöffnungen 26' für Zylinderkopfschrauben.

Die von dem Sensor 130 erzeugten Ausgangssignale sollen über Leitungen 138 und 140 abgegriffen und einem Mikroprozessor 142 zugeführt werden, welchem außerdem über eine Leitung 144 das inkrementale Ausgangssignal eines Drehwinkelgebers 146 zugeführt wird, der mit der Kurbelwelle des Verbrennungsmotors gekoppelt ist und dessen Ausgangssignal die jeweilige Drehwinkelstellung der Kurbelwelle repräsentiert. Eine Ausgangsleitung 148 des Mikroprozessors 142 führt zu der nicht dargestellten Motorsteuerung.

Die Fig. 7 zeigt die Dichtungsplatte 134 und eine Brennraum-Einfassung 136. Die Dichtungsplatte 134 besteht im wesentlichen aus einem Trägerblech 150, von dem nach oben und unten angestanzte und umgebogene Verankerungszungen 152 abstehen, die der Verbindung zweier auf die beiden Seiten des Trägerblechs 150 aufgewalzter Weichstoffschichten 154 und 156 mit dem Trägerblech dienen. Die Verankerungszungen 152 sind in parallel zu den Längsrändern 158 und 160 der Dichtungsplatte 134 verlaufenden Reihen angeordnet, wobei neben einer Reihe von vom Trägerblech nach oben abstehenden Verankerungszungen zwei Reihen von vom Trägerblech nach unten abstehenden Verankerungszungen (und umgekehrt) verlaufen.

Erfindungsgemäß ist aus der Dichtungsplatte 134 ein Längsschlitz 162 ausgestanzt, dessen Enden sich zweckmäßigerweise nicht bis zum Rand der Dichtungsplatte 134 erstrecken, um die Formstabilität der Dichtungsplatte nicht zu beeinträchtigen. In diesen Längsschlitz ist der langgestreckte Sensor 130 eingelegt, dessen Durchmesser vorteilhafterweise gleich der Dicke der Dichtungsplatte 134 ist. Der noch freie Raum des Längsschlitzes 162 ist wieder mit einem elastomeren Material 164 ausgefüllt, in welches der Sensor 130 eingebettet ist und das auch dazu dient, den Sensor 130 im Längsschlitz 162 zu befestigen.

Der Sensor 130 wird von einem auf dem Markt erhältlichen piezoelektrischen Elastomerkabel gebildet, das nach Art eines Koaxialkabels aufgebaut st und aus einem mantelartigen metallischen Außenleiter 166, einem eine Seele bildenden metallischen Innenleiter 168 und einem den letzteren umgebenden und den Außenleiter 166 ausfüllenden elastomeren piezoelektrischen Material besteht. Letzteres erzeugt überall dort, wo der Sensor 130 durch sich zeitlich ändernde Drücke gepreßt wird, eine sich zeitlich ändernde elektrische Potentialdifferenz zwischen Innenleiter 168 und Außenleiter 166; das auf diesen sich zeitlich ändernden Potentialdifferenzen beruhende elektrische Ausgangssignal des Sensors 130 läßt sich über die Leitungen 138 und 140 abgreifen, die am einen Ende des Sensors an den Außenleiter 166 bzw. den Innenleiter 168 angeschlossen sind. Der Mikroprozessor 142 hat nun eine die erwünschten und den Brennraumöffnungen 14', 16', 18' und 20' individuell zugeordneten Nutzsignale erfassende Fensterfuntion, durch die alle anderen Teile des Ausgangssignals des Sensors 130 ausgeblendet werden; diese Fensterfunktion wird vom Ausgangssignal des Drehwinkelgebers 146 gesteuert, und zwar derart, daß auf der Ausgangsleitung 148 des Mikroprozessors 142 nur diejenigen Nutzsignale erscheinen, die vom Sensor 130 innerhalb von durch die Fensterfunktion des Mikroprozessors vorgegebenen Drehwinkelbereichen der Kurbelwelle erzeugt werden. Sollen durch den Sensor 130 z.B. Zündaussetzer erkannt werden, liegen diese Drehwinkelbereiche so, daß sie die oberen Totpunkte der Kolben der vier Zylinder enthalten, die den vier Brennraum-Durchgangsöffnungen 14', 16', 18' und 20' zugeordnet sind. Auf diese Weise ist gewährleistet, daß von den vom Sensor 130 erzeugten Ausgangssignalen nur diejenigen Teile als Nutzsignale verwertet werden, welche sich den für die Motorüberwachung interessierenden Zeitabschnitten der Verbrennungsabläufe in öden verschiedenen Zylindern streng und zylinderspezifisch zuordnen lassen, während alle anderen Teile der vom Sensor 130 erzeugten Ausgangssignale durch die Fensterfunktion des Mikroprozessors 142 ausgeblendet werden.

Bei der Ausführungsform nach den Fig. 6 und 7 bilden also die den Brennraum-Durchgangsöffnungen 14', 16', 18' und 20' am nächsten liegenden Abschnitte des Sensors 130 die Sensorelemente bzw. sensitiven Sensorbereiche im Sinne der vorliegenden Erfindung.

Wenn der Sensor 130 von einem piezoelektrischen Elastomerkabel gebildet wird, kann er auch zusätzlich die Abdichtfunktion einer elastomeren Dichtraupe übernehmen, wie sie sonst häufig auf der Dichtungsplatte einer Zylinderkopfdichtung angebracht wird; es ist dazu lediglich erforderlich, das piezoelektrische Elastomerkabel ein- oder beidseitig über die Dichtungsplatte überstehen zu lassen. Entsprechendes gilt auch für das elastomere Material 164, in das das piezoelektrische Elastomerkabel eingebettet ist. Ein besonderer Vorteil des als Koaxialkabel ausgebildeten Sensors 130 ist darin zu sehen, daß durch den Außenleiter 166 von außen einwirkende elektrische Störungen gut abgeschirmt werden und eine elektrische Abschirmung zu einem Anschlußstecker für den Sensor einfach möglich ist. In Abänderung der dargestellten Ausführungsform wäre es ferner möglich, für jede einzelne Brennraum-Durchgangsöffnung einen separaten, kürzeren Sensor vorzusehen. Anstelle eines Sensorkabels kann bzw. können auch eine flache Sensorplatte bzw. Sensorplatten Verwendung finden - diese sind wie ein Kondensator aufgebaut, wobei an die Stelle eines isolierenden Dielektrikums das piezoelektrische elastomere Material tritt.

Die Fig. 8 zeigt einen Ausschnitt aus einer weiteren Ausführungsform einer erfindungsgemäßen Zylinderkopfdichtinng, welche grundsätzlich bis auf die Art des Sensors mit der Ausführungsform nach den Fig. 6 und 7 übereinstimmen kann. Die Fig. 8 zeigt einen Bereich einer Dichtungsplatte 180, die genau so aufgebaut ist wie die Dichtungsplatte 134 der Zylinderkopfdichtung gemäß den Fig. 6 und 7; ihr Trägerblech wurde mit 182 bezeichnet, die nach einer Richtung vom Trägerblech abstehenden Verankerungszungen einer Reihe solcher Zungen sind bei 184 angedeutet. In Fig. 8 sieht man jedoch nur eine der beiden Weichstoffschichten, nämlich die der Weichstoffschicht 156 gemäß Fig. 7 entsprechende Weichstoffschicht 186, da in die obere Weichstoffschicht der Ausführungsform nach Fig. 8 eine sich nur bis zum Trägerblech 182 erstreckende Nut eingearbeitet wurde, in welche ein langgestreckter, dem Sensor 130 der Ausführungsform nach den Fig. 6 und 7 entsprechender Sensor 188 eingelegt wurde, worauf die Nut mit einem verhältnismäßig harten elastomeren Material 190 ausgefüllt wurde. Bei dem Sensor 188 soll es sich erfindungsgemäß um einen bekannten Glasfaser-Lichtleiter-Sensor handeln, dessen Durchgangsdämpfung sich durch eine zeitlich variierende Krümmung der Lichtleiterachse zeitabhängig verändern läßt. Dies ist ein bekannter Effekt - durch Verformung des Glasfaser-Lichtleiters im Sinne von Mikrokrümmungen der Lichtleiterachse tritt an den Krümmungsstellen Licht aus dem Lichtleiter aus, wodurch die Durchgangsdämpfung des Lichtleiters erhöht wird; wird der Lichtleiter an bestimmten Stellen zeitabhängig unterschiedlich stark gekrümmt, ändert sich also an diesen Stellen die Durchgangsdämpfung gleichfalls zeitabhängig.

Da das Trägerblech 182 beim Aufwalzen der beiden Weichstoffschichten unvermeidbar uneben wird, wird der Sensor 188 beim Auflegen auf das Trägerblech 182 längs seiner Achse unterschiedlich gekrümmt und die im Motorbetrieb auftretenden Dichtspaltänderungen führen dann zu entsprechenden zeitlichen Veränderungen der Krümmungen des Lichtleiters und damit zu entsprechenden zeitlichen Änderungen der Durchgangsdämpfung in den für die Erfassung des Verbrennungsablaufs relevanten Bereichen des Sensors 188.

Wird für alle Brennraum-Durchgangsöffnungen der erfindungsgemäßen Zylinderkopfdichtung ein gemeinsamer Glasfaser-Lichtleiter-Sensor verwendet, so gilt für die Signalverarbeitung dasselbe wie für die Ausführungsform nach den Fig. 6 und 7.

In Fig. 9 ist schließlich ein Ausschnitt aus einer weiteren Ausführungsform der erfindungsgemäßen Zylinderkopfdichtung in einer Draufsicht dargestellt. Die Fig. 9 zeigt eine Dichtungsplatte 200 mit zwei Brennraum-Durchgangsöffnungen 14'' und 16'', wobei die diese Brennraum-Durchgangsöffnungen umfassenden Randbereiche der Dichtungsplatte 200 wiederum mit Brennraum-Einfassungen 202 versehen sind. Mit 204 wurden Schraubendurchgangsöffnungen der Dichtungsplatte 200 bezeichnet.

Auf die Dichtungsplatte 200 ist ein langgestrecker Sensor 206 aufgelegt, er kann aber auch in die Dichtungsplatte eingebettet sein. Auch bei dieser Ausführungsform soll der Sensor 206 wieder an allen Brennraum-Durchgangsöffnungen der Zylinderkopfdichtung vorbeilaufen, d.h. allen diesen Brennraum-Durchgangsöffnungen gemeinsam sein. Bei dem Sensor 206 soll es sich um einen mehrlagigen Folienstreifen handeln, und zwar bevorzugt um einen Folienstreifen mit einer piezoelektrischen elastomeren Schicht oder mit einer dielektrischen Schicht, so daß es sich im letztgenannten Fall bei dem Sensor 206 um einen kapzitiven Sensor handelt. Zur zylinderspezifischen Erfassung des Verbrennungsablaufs sind in den den Brennraum-Durchgangsöffnungen am nächsten liegenden Bereichen des Sensors 206 oben und unten auf der piezoelektrischen bzw. dielektrischen Schicht metallische Kontaktschichten 208 angeordnet, die zur sicheren Vermeidung elektrischer Kurzschlüsse vorzugsweise wesentlich schmäler sind als die piezoelektrische bzw. dielektrische Schicht und von denen jeweils eine Leiterbahn 210 wegführt, um an jedem der für eine zylinderselektive Erfassung des Verbrennungsvorgangs relevanten Sensorbereich ein Sensorsignal abgreifen zu können.

Wie bereits vorstehend erwähnt, können bei allen dargestellten und beschreibenen Ausführungsformen mit piezoelektrischen Sensorelementen an deren Stelle piezoresistive Sensorelemente treten.

Bei Verwendung eines langgestrecken, für alle Brennraum-Durchgangsöffnungen gemeinsamen Sensors in Form eines piezoelektrischen Folienstreifens empfiehlt es sich, zur Verbesserung des Verhältnisses Nutzsignal zu Störsignalanteilen den Sensorstreifen im Bereich der Dichtungsplatte zwischen den Schraubendurchgangsöffnungen breiter zu machen als in den übrigen Bereichen.

Anstelle des in Verbindung mit Fig. 1 erörterten Steckeranschlusses könnten die zu den Sensorelementen bzw. den sensitiven Bereichen des Sensors führenden Anschlußleitungen auch in Form eines Kabelbaums von der Zylinderkopfdichtinng weggeführt werden, um das Risiko zu vermeiden, daß sich ein an der Zylinderkopfdichtung angebrachter Stecker aufgrund von im Betrieb auftretenden Vibrationen von der Zylinderkopfdichtinng löst.

Bei Ausführungsformen wie derjenigen der Fig. 8, bei denen der Weichstoff der Dichtungsplatte partiell entfernt wird, ist es nicht unbedingt erforderlich, den Weichstoff bis zum Trägerblech zu entfernen, da eine dünne Schicht des Weichstoffs ohne weiteres auf dem Trägerblech verbleiben kann, ohne die Funktion des Sensors zu beeinträchtigen, ja es kann sogar ausreichend sein, in den Weichstoff einfach eine Vertiefung, wie einen Kanal, einzuprägen.

Die zum Einbetten oder Abdecken der Sensorelemente verwendeten elastomeren Materialien und metallische Kontakt- und/oder Leiterschichten werden zweckmäßigerweise im Siebdruckverfahren aufgebracht.

Wird ein Trägerblech ohne Verankerungszungen verwendet, d.h. ein glattes Trägerblech, kann man die für einen Glasfaser-Lichtleiter-Sensor erforderlichen Unebenheiten auch mit einem entsprechenden Werkzeug herbeiführen, z.B. beim Einprägen eines den Sensor aufnehmenden Kanals in den Weichstoff der Dichtungsplatte.

Besonders erwähnt werden soll noch, daß die in Fig. 5 gezeigte Metallkapsel 114 den Vorteil mit sich bringt, daß die Keramikscheibe nicht durch im Motorbetrieb auftretende Schiebebewegungen zwischen Zylinderkopf, Zylinderkopfdichtinng und Motorblock zerstört werden kann.

Bezüglich der Erkennung einer klopfenden Verbrennung sei noch darauf hingewiesen, daß bei sonst gleichen Betriebsparametern (Drehzahl und Drehmoment) eine klopfende Verbrennung eine deutliche Zunahme der Amplitude des von dem betreffenden Sensorelement einer erfindinngsgemäßen Zylinderkopfdichtung gelieferten Signals zur Folge hat (im Vergleich zu einer normalen, nichtklopfenden Verbrennung). Außerdem führt eine klopfende Verbrennung aber auch zu für das Klopfen charakteristischen, hochfrequenten Signalanteilen (mehr als 5 kHz), die sich mit einer erfindinngsgemäßen Zylinderkopfdichtung gleichfalls zuverlässig zylinderspezifisch erfassen lassen.

## Patentansprüche

1. Zylinderkopfdichtung (10) zur Abdichtung des Dichtspalts zwischen Motorblock und Zylinderkopf eines Mehrzylinder-Verbrennungsmotors, welche eine Dichtungsplatte (12, 98, 134, 180, 200) mit mehreren Brennraum-Durchgangsöffnungen (14, 16, 18, 20), ein Sensorelement (34, 36, 38, 40, 94, 106, 130, 188, 206) zur Erfassung von Dichtspaltbewegungen und an den die Brennraum-Durchgangsöffnungen umgebenden Rändern der Dichtungsplatte Brennraum-Dichtelemente (22, 136, 202) aufweist,
dadurch gekennzeichnet, daß die Dichtungsplatte mit mehreren, den Brennraum-Durchgangsöffnungen zugeordneten Sensorelementen zur zylinderspezifischen Erfassung der von den Druckänderungen im betreffenden Brennraum verursachten Dichtspaltbewegungen senkrecht zur Ebene der Dichtungsplatte versehen ist,
daß die Sensorelemente außerhalb der Brennraum-Dichtelemente angeordnet sind
und daß die Sensorelemente solche der folgenden Gruppe sind: piezoelektrische, piezoresistive und kapazitive Sensoren sowie Glasfaser-Lichtleiter-Sensoren mit durch Krümmung der Lichtleiterachse veränderlicher Durchgangsdämpfung.

2. Zylinderkopfdichtung nach Anspruch 1, deren Dichtungsplatte ungefähr rechteckig ist, ungefähr entlang von parallel zu ihren Längsrändern verlaufenden Linien Schraubendurchgangsöffnungen (26, 204) für Zylinderkopfschrauben aufweist und zwischen ihren Brennraum-Durchgangsöffnungen stegartige Bereiche besitzt, wobei die Schraubendurchgangsöffnungen ungefähr in den Verlängerungen dieser stegartigen Bereiche angeordnet sind,
dadurch gekennzeichnet, daß für jede Brennraum-Durchgangsöffnung mindestens ein Sensorelement vorgesehen ist, und daß die Sensorelemente in den Bereichen zwischen den Schraubendurchgangsöffnungen liegen.

3. Zylinderkopfdichtung nach Anspruch 1 oder 2,
dadurch gekennzeichnet, daß die Sensorelemente von sensitiven Bereichen eines langgestreckten Sensors (130, 188) gebildet werden, welcher zwischen diesen sensitiven Bereichen inaktive Bereiche aufweist und an allen Brennraum-Durchgangsöffnungen vorbeiläuft.

4. Zylinderkopfdichtung nach Anspruch 3, deren Dichtungsplatte ein beidseitig mit Weichstoff beschichtetes Trägerblech (150) aufweist, welches mit in Längsrichtung der Dichtungsplatte verlaufenden Reihen von in den Weichstoff eingreifenden Verankerungszungen (152) versehen ist, wobei die Zungen einander benachbarter Reihen in einander entgegengesetzten Richtungen vom Trägerblech abstehen,
dadurch gekennzeichnet, daß der als Lichtleiter ausgebildete Sensor (130) auf der einer Zungenreihe gegenüberliegenden Seite des Trägerblechs in den Weichstoff eingelassen und mit einer elastomeren Masse abgedeckt ist.

5. Zylinderkopfdichtinng nach einem oder mehreren der vorstehenden Ansprüche,
dadurch gekennzeichnet, daß die Sensorelemente als Weg- und/oder Kraft- und/oder Druck- und/oder Schwingungsaufnehmer ausgebildet sind.

6. Zylinderkopfdichtinng nach einem oder mehreren der vorstehenden Ansprüche,
dadurch gekennzeichnet, daß die Sensorelemente möglichst nahe dem benachbarten Brennraum-Dichtelement angeordnet sind.

7. Zylinderkopfdichtung nach einem oder mehreren der vorstehenden Ansprüche,
dadurch gekennzeichnet, daß das Sensorelement mindestens einer der endständigen Brennraum-Durchgangsöffnungen zwischen letzterer und dem benachbarten Schmalseitenrand der Dichtungsplatte angeordnet ist.

8. Zylinderkopfdichtung nach einem oder mehreren der vorstehenden Ansprüche, deren Sensorelemente mit Anschlußleitungen (34a, 34b) versehen sind,
dadurch gekennzeichnet, daß die Dichtungsplatte einen Randbereich aufweist, von dem mindestens eine seiner beiden Hauptobenflächen im eingebauten Zustand der Zylinderkopfdichtinng freiliegt, und daß die Anschlußleitungen zu der freiliegenden Hauptoberfläche dieses Randbereichs geführt sind.

9. Zylinderkopfdichtung nach Anspruch 8,
dadurch gekennzeichnet, daß der Randbereich Steckeranschlußelemente (46 aufweist.

10. Zylinderkopfdichtung nach einem oder mehreren der vorstehenden Ansprüche,
dadurch gekennzeichnet, daß die Sensorelemente durch eine Folie (42, 44) abgedeckt sind.

11. Zylinderkopfdichtung nach Anspruch 10,
dadurch gekennzeichnet, daß die Sensorelemente zwischen auf die Dichtungsplatte aufkaschierten Folien eingeschlossen sind.

12. Zylinderkopfdichtung nach den Ansprüchen 8 und 10 oder 11,
dadurch gekennzeichnet, daß die Anschlußleitungen bis auf Anschlußstellen von der Folie abgedeckt sind.

13. Zylinderkopfdichtung nach Anspruch 12,
dadurch gekennzeichnet, daß die Anschlußleitungen auf die Folie aufgedruckte Leiterbahnen sind.

14. Zylinderkopfdichtung nach einem oder mehreren der Ansprüche 8 bis 13,
dadurch gekennzeichnet, daß die Anschlußleitungen einen mäanderförmigen Verlauf aufweisen.

15. Zylinderkopfdichtinng nach einem oder mehreren der Ansprüche 8 bis 12,
dadurch gekennzeichnet, daß die Anschlußleitungen als Koaxialkabel ausgebildet sind.

16. Zylinderkopfdichtung nach einem oder mehreren der vorstehenden Ansprüche, bei der die Hauptoberflächen der Dichtungsplatte von mindestens einer Weichstoffschicht gebildet sind, dadurch gekennzeichnet, daß die Weichstoffschicht an denjenigen Stellen, an denen Sensorelemente an der Dichtungsplatte angeordnet sind, durch Vorpressen mit mindestens einer die Sensorelemente aufnehmenden Einprägung versehen ist.

17. Zylinderkopfdichtung nach einem oder mehreren der vorstehenden Ansprüche,
dadurch gekennzeichnet, daß die Sensorelemente in mindestens eine aus der Dichtungsplatte ausgestanzte Öffnung eingelegt sind.

18. Zylinderkopfdichtung nach einem oder mehreren der vorstehenden Ansprüche, deren Dichtungsplatte eine Oberflächenbeschichtung aufweist,
dadurch gekennzeichnet, daß die Oberflächenbeschichtung die Sensorelemente überdeckt.

19. Zylinderkopfdichtung nach einem oder mehreren der vorstehenden Ansprüche,
dadurch gekennzeichnet, daß alle Sensorelemente jeweils eine freiliegende Kontaktstelle aufweisen und daß alle dieser Kontaktstellen in einer der beiden Hauptoberflächen der Dichtungsplatte liegen.

20. Verwendung einer Zylinderkopfdichtung nach einem oder mehreren der vorstehenden Ansprüche in einem eine Steuer- und/oder Regel- und/oder Überwachungsschaltung aufweisenden Hubkolben-Verbrennungsmotor,
dadurch gekennzeichnet, daß die Sensorelemente der Zylinderkopfdichtinng Bestandteile dieser Schaltung sind.

21. Verwendung einer Zylinderkopfdichtung gemäß Anspruch 20,
dadurch gekennzeichnet, daß die Sensorelemente zur Erkennung von Zündaussetzern sowie zur Abschaltung der Kraftstoffzufuhr zu dem entsprechenden Zylinder verwendet werden.

22. Verwendung einer Zylinderkopfdichtinng gemäß Anspruch 20,
dadurch gekennzeichnet, daß die Sensorelemente als Klopfsensoren zur Veränderung des Zündzeitpunkts des jeweils zugeordneten Zylinders verwendet werden.

23. Verwendung einer Zylinderkopfdichtung gemäß Anspruch 20,
dadurch gekennzeichnet, daß außer den Sensorelementen ein weiterer Teil der Schaltung an der Dichtungsplatte angeordnet ist, und zwar auf einem bei eingebauter Dichtung freiliegenden Randbereich der Dichtungsplatte.

## Claims

1. Cylinder head gasket (10) for sealing the sealing gap between engine block and cylinder head of a multi-cylinder internal combustion engine, said gasket having a sealing plate (12, 98, 134, 180, 200) with a plurality of combustion chamber through-openings (14, 16, 18, 20), a sensor element (34, 36, 38, 40, 94, 106, 130, 188, 206) for detecting sealing gap movements and combustion chamber sealing elements (22, 136, 202) at the edges of the sealing plate surrounding the combustion chamber through-openings, characterized in that the sealing plate is provided with a plurality of sensor elements associated with the combustion chamber through-openings for the cylinder-specific detection of sealing gap movements perpendicular to the plane of the sealing plate caused by the changes in pressure in the relevant combustion chamber, that the sensor elements are arranged outside the combustion chamber sealing elements and that the sensor elements are elements from the following group: piezoelectric, piezoresistive and capacitive sensors as well as glass-fibre light-guide sensors with transmission loss variable by bending the light-guide axis.

2. Cylinder head gasket as defined in claim 1, the sealing plate thereof being approximately rectangular, having screw through-holes (26, 204) for cylinder head screws approximately along lines extending parallel to its longitudinal edges and web-like regions between its combustion chamber through-openings, the screw through-holes being arranged approximately in the extensions of these web-like regions, characterized in that at least one sensor element is provided for each combustion chamber through-opening, and that the sensor elements are located in the regions between the screw through-holes.

3. Cylinder head gasket as defined in claim 1 or 2, characterized in that the sensor elements are formed by sensitive areas of an elongated sensor (130, 188), said sensor having inactive areas between these sensitive areas and extending past all the combustion chamber through-openings.

4. Cylinder head gasket as defined in claim 3, the sealing plate thereof having a sheet metal carrier (150) coated on both sides with soft material and provided with rows of anchoring tongues (152) engaging in the soft material, said rows extending in the longitudinal direction of the sealing plate and the tongues of adjacent rows protruding from the sheet metal carrier in opposite directions, characterized in that the sensor (130) designed as a light guide is embedded into the soft material on the side of the sheet metal carrier opposite a row of tongues and is covered with an elastomeric substance.

5. Cylinder head gasket as defined in any or several of the preceding claims, characterized in that the sensor elements are designed as displacement and/or force and/or pressure and/or oscillation pickup means.

6. Cylinder head gasket as defined in any or several of the preceding claims, characterized in that the sensor elements are arranged as close as possible to the adjacent combustion chamber sealing element.

7. Cylinder head gasket as defined in any or several of the preceding claims, characterized in that the sensor element of at least one of the terminal combustion chamber through-openings is arranged between the latter and the adjacent narrow side edge of the sealing plate.

8. Cylinder head gasket as defined in any or several of the preceding claims, the sensor elements thereof being provided with connection lines (34a, 34b), characterized in that the sealing plate has an edge region, at least one of the two main surfaces thereof being exposed when the cylinder head gasket is mounted, and that the connection lines lead to the exposed main surface of this edge region.

9. Cylinder head gasket as defined in claim 8, characterized in that the edge region comprises plug connection elements (46).

10. Cylinder head gasket as defined in any or several of the preceding claims, characterized in that the sensor elements are covered by a foil (42, 44).

11. Cylinder head gasket as defined in claim 10, characterized in that the sensor elements are enclosed between foils laminated to the sealing plate.

12. Cylinder head gasket as defined in claims 8 and 10 or 11, characterized in that the connection lines are covered by the foil except for connection points.

13. Cylinder head gasket as defined in claim 12, characterized in that the connection lines are conductor paths printed onto the foil.

14. Cylinder head gasket as defined in any or several of claims 8 to 13, characterized in that the connection lines follow a meandering course.

15. Cylinder head gasket as defined in any or several of claims 8 to 12, characterized in that the connection lines are designed as coaxial cables.

16. Cylinder head gasket as defined in any or several of the preceding claims, wherein the main surfaces of the sealing plate are formed by at least one layer of soft material, characterized in that at those points where sensor elements are arranged on the sealing plate the layer of soft material is provided by pressing with at least one impression receiving the sensor elements.

17. Cylinder head gasket as defined in any or several of the preceding claims, characterized in that the sensor elements are inserted into at least one opening punched out of the sealing plate.

18. Cylinder head gasket as defined in any or several of the preceding claims, the sealing plate thereof having a surface coating, characterized in that the surface coating covers the sensor elements.

19. Cylinder head gasket as defined in any or several of the preceding claims, characterized in that all the sensor elements have an exposed contact point each and that all these contact points are located in one of the two main surfaces of the sealing plate.

20. Use of a cylinder head gasket as defined in any or several of the preceding claims in a reciprocating internal combustion engine comprising a control and/or regulating and/or monitoring circuit, characterized in that the sensor elements of the cylinder head gasket are components of this circuit.

21. Use of a cylinder head gasket as defined in claim 20, characterized in that the sensor elements are used for detecting ignition misses as well as for cutting off the supply of fuel to the corresponding cylinder.

22. Use of a cylinder head gasket as defined in claim 20, characterized in that the sensor elements are used as knock sensors for changing the ignition point of the respectively associated cylinder.

23. Use of a cylinder head gasket as defined in claim 20, characterized in that apart from the sensor elements an additional part of the circuit is arranged on the sealing plate, namely on an edge region of the sealing plate exposed when the gasket is mounted.

## Revendications

1. Joint de culasse (10) pour rendre étanche l'intervalle d'étanchéité entre le bloc-moteur et la culasse d'un moteur à combustion interne à plusieurs cylindres, comportant une plaque d'étanchéité (12, 98, 134, 180, 200) avec plusieurs orifices de passage de chambre de combustion (14, 16, 18, 20), un élément de détection (34, 36, 38, 40, 94, 106, 130, 188, 206) pour saisir des mouvements de l'intervalle d'étanchéité, et des éléments d'étanchéité (22, 136, 202) de la chambre de combustion sur les bords de la plaque d'étanchéité qui entourent les orifices de passage de la chambre de combustion, caractérisé en ce que la plaque d'étanchéité est pourvue de plusieurs éléments de détection, associés aux orifices de passage de chambre de combustion, pour saisir de façon spécifique pour chaque cylindre les déplacements de l'intervalle d'étanchéité perpendiculairement au plan de la plaque d'étanchéité et provoqués par les variations de pression dans la chambre de combustion correspondante, en ce que les élément de détection sont disposés en dehors des éléments d'étanchéité de la chambre de combustion et en ce que les éléments de détection font partie du groupe suivant : capteurs piézoélectrique, piézorésistants et capacitifs ainsi que capteurs à guide de lumière par fibre de verre avec amortissement de passage modifiable par courbure de l'axe du guide de lumière.

2. Joint de culasse selon la revendication 1, dont la plaque d'étanchéité est à peu près rectangulaire et présente à peu près le long de lignes parallèles à ses bords longitudinaux des orifices de passage pour vis (26, 204) pour les vis de culasse et comporte entre ses orifices de passage de chambre de combustion des zones en forme de lamelles, les orifices de passage des vis étant disposés à peu près dans les prolongements de ces zones en forme de lamelles, caractérisé en ce que, pour chaque orifice de passage de chambre de combustion, il est prévu au moins un élément de détection et en ce que les éléments de détection sont situés dans les zones entre les orifices de passage pour les vis.

3. Joint de culasse selon la revendication 1 ou 2, caractérisé en ce que les éléments de détection sont formés par des zones sensibles d'un capteur allongé (130, 188) qui présente des zones inactives entre ces zones sensibles et qui passe devant tous les orifices de passage de chambre de combustion.

4. Joint de culasse selon la revendication 3, dont la plaque d'étanchéité présente une tôle de support (150) recouverte sur les deux côtés d'une matière molle et pourvue de rangées, disposées dans la direction longitudinale de la plaque d'étanchéité, de languettes d'ancrage (152) pénétrant dans la matière molle, les languettes de rangées voisines l'une de l'autre étant écartées de la tôle de support dans des directions opposées l'une de l'autre, caractérisé en ce que le capteur (130) réalisé sous forme d'un guide de lumière est incorporé dans la matière molle sur le côté de la tôle de support opposé à une rangée de languettes et est recouvert par une masse d'élastomère.

5. Joint de culasse selon une ou plusieurs des revendications précédentes, caractérisé en ce que les éléments de détection sont constitués par des capteurs de déplacement et/ou de force et/ou de pression et/ou de vibrations.

6. Joint de culasse selon une ou plusieurs des revendications précédentes, caractérisé en ce que les éléments de détection sont disposés le plus près possible de l'élément d'étanchéité de chambre de combustion contigu.

7. Joint de culasse selon une ou plusieurs des revendications précédentes, caractérisé en ce que l'élément de détection d'au moins l'un des orifices de passage de chambre de combustion en position extrême est agencé entre ce dernier et le bord du côté étroit, contigu, de la plaque d'étanchéité.

8. Joint de culasse selon une ou plusieurs des revendications précédentes, dont les éléments de détection sont pourvus de conducteurs de raccordement (34a, 34b), caractérisé en ce que la plaque d'étanchéité présente une zone de bord dont au moins l'une de ses deux surfaces principales est libre à l'état monté du joint de culasse et en ce que les conducteurs de raccordement sont amenés jinsqu'à la surface principale libre de cette zone de bord.

9. Joint de culasse selon la revendication 8, caractérisé en ce que la zone de bord présente des éléments de raccordement à fiche (46).

10. Joint de culasse selon une ou plusieurs des revendications précédentes, caractérisé en ce que les éléments de détection sont recouverts par une feuille (42, 44).

11. Joint de culasse selon la revendication 10, caractérisé en ce que les éléments de détection sont enfermés entre des feuilles laminées sur la plaque d'étanchéité.

12. Joint de culasse selon les revendications 8 et 10 ou 11, caractérisé en ce que les conducteurs de raccordement sont recouverts par la feuille jusqu'à des endroits de raccordement.

13. Joint de culasse selon la revendication 12, caractérisé en ce que les conducteurs de raccordement sont des pistes conductrices imprimées sur la feuille.

14. Joint de culasse selon une ou plusieurs des revendications 8 à 13, caractérisé en ce que les conducteurs de raccordement présentent un tracé en forme de méandres.

15. Joint de culasse selon une ou plusieurs des revendications 8 à 12, caractérisé en ce que les conducteurs de raccordement sont réalisés sous forme de câble coaxial.

16. Joint de culasse selon une ou plusieurs des revendications précédentes, dans lequel les surfaces principales de la plaque d'étanchéité sont formées d'au moins une couche de matière molle, caractérisé en ce que la couche de matière molle est pourvue par pressage préalable, aux endroits où les éléments de détection sont disposés sur la plaque d'étanchéité, d'une empreinte logeant au moins un des éléments de détection.

17. Joint de culasse selon une ou plusieurs des revendications précédentes, caractérisé en ce que les éléments de détection sont insérés dans au moins un orifice poinçonné dans la plaque d'étanchéité.

18. Joint de culasse selon une ou plusieurs des revendications précédentes, dont la plaque d'étanchéité présente un revêtement de surface, caractérisé en ce que le revêtement de surface recouvre les éléments de détection.

19. Joint de culasse selon une ou plusieurs des revendications précédentes, caractérisé en ce que tous les éléments de détection présentent chacun un endroit de contact libre et en ce que tous ces endroits de contact sont situés dans l'une des deux surfaces principales de la plaque d'étanchéité.

20. Utilisation d'un joint de culasse selon une ou plusieurs des revendications précédentes dans un moteur à piston à combustion interne présentant un circuit de commande et/ou de régulation et/ou de surveillance, caractérisée en ce que les éléments de détection du joint de culasse sont des composants de ce circuit.

21. Utilisation d'un joint de culasse selon la revendication 20, caractérisée en ce que les éléments de détection sont utilisés pour détecter des ratés d'allumage ainsi que pour interrompre l'alimentation de carburant vers le cylindre correspondant.

22. Utilisation d'un joint de culasse selon la revendication 20, caractérisée en ce que les éléments de détection sont utilisés comme capteurs de cognement pour modifier le moment de l'allumage du cylindre chaque fois associé.

23. Utilisation d'un joint de culasse selon la revendication 20, caractérisée en ce que, outre les éléments de détection, une autre partie du circuit est agencée sur la plaque d'étanchéité, c'est-à-dire sur une zone de bord, de la plaque d'étanchéité, qui est libre lorsque le joint de culasse est monté.
